# EUROPÄISCHE PATENTANMELDUNG

(11) **EP 4 231 502 A1**
(43) Veröffentlichungstag der Anmeldung: **23.08.2023**
(21) Anmeldenummer: 23153605.3
(22) Anmeldetag: 27.01.2023
(51) Int. Cl.: H02K 1/14, H02K 3/34, H02K 3/32

(54) **STATOR FÜR EINE ELEKTRISCHE MASCHINE SOWIE VERFAHREN ZUR HERSTELLUNG EINES SOLCHEN**

(30) Priorität: 18.02.2022 DE 102022103897
(71) Anmelder: ebm-papst Mulfingen GmbH & Co. KG, 74673 Mulfingen (DE)
(72) Erfinder: MASCHKE, Matthias, 74635 Kupferzell (DE); ZELLER, Alfons, 97980 Bad Mergentheim (DE); SCHMIDT, Tobias, 74744 Ahorn-Schillingsstadt (DE); WALTER, Manuel, 74523 Schwäbisch Hall (DE); LETTER, Tobias, 97980 Bad Mergentheim (DE); FOHMANN, Martin, 97959 Assamstadt (DE)
(74) Vertreter: Staeger & Sperling Partnerschaftsgesellschaft mbB

(57) **Zusammenfassung**

Die Erfindung betrifft einen Stator für eine elektrische Maschine mit einer Vielzahl von gleichmäßig um eine Rotationsachse angeordneten Zähnen (10) und einer Vielzahl von durch je zwei benachbarte Zähne gebildeten Nuten (20), wobei die Zähne (10) mit einer Isolationsschicht (30) beschichtet sind, welche sich jeweils von einem Zahnhals (11) der Zähne, einen Nuteingang (21) bestimmende Auskragungen (13) umgreifend und zu einer zwischen je zwei Zähnen (10) liegenden Nut (20) hin abdeckend bis auf einen durch die jeweilige Auskragung (13) gebildeten Abschnitt (141) einer Zahnkopfstirnseite (14) erstreckt.

## Beschreibung

Die Erfindung betrifft einen Stator für eine elektrische Maschine, insbesondere für einen Außenläufermotor, sowie ein Verfahren zur Herstellung eines erfindungsgemäßen Stators.

Grundsätzlich weist ein Stator ein Statorpaket auf, welches oftmals aus einer Vielzahl von aufeinandergeschichteten Blechen gebildet ist. Die aufeinandergestapelten Bleche bzw. das Statorpaket bestimmen eine Vielzahl von gleichmäßig um eine Rotationsachse angeordneten Zähnen und eine Vielzahl von durch je zwei benachbarte Zähne gebildete Nuten, sodass also jeweils eine Nut zwischen zwei Zähnen angeordnet ist.

Um die Zähne werden jeweils Statorspulen angeordnet, welche durch umwickeln der Zähne mit einem Draht hergestellt werden, sodass der Draht in den Nuten angeordnet ist und die Zähne jeweils umläuft.

Zur Optimierung der elektrischen Maschine bzw. des Stators ist es von Vorteil, einen möglichst hohen Nutfüllfaktor zu erreichen, die Zähne derart auszubilden, dass diese in einfacher Weise umwickelt werden können, und dabei zugleich Luft- und Kriechstreckenanforderungen des Stators einzuhalten, um einen Kurzschluss bzw. allgemein eine Fehlfunktion zu vermeiden.

Bei einer einen Stator aufweisenden elektrischen Maschinen ist im Stand der Technik zum Teil vorgesehen, dass das gesamte Statorpaket komplett mit einer Isolation umspritzt wird. Eine solche Komplettumspritzung des gesamten Statorpakets hat den Vorteil, dass ein hoher Nutfüllfaktor erreicht wird. Allerdings hat die Komplettumspritzung aufgrund eines größeren erforderlichen Abstands zwischen Statorpaket und einem Magnetsegment des den Stator umlaufenden Rotors d.h. aufgrund eines größeren Luftspalts negative Auswirkungen auf den Motorwirkungsgrad.

Gemäß der im Stand der Technik üblichen Ausführung, ist die Isolation bzw. eine die Isolation bildende Kunststoffumspritzung ausschließlich in den Nuten angeordnet, sodass sich die Kunststoffumspritzung nicht in die Nuteingänge oder nach außerhalb der Nuten erstreckt. Hierbei muss die Kunststoffumspritzung in den Nuten angrenzend an die Nuteingänge Erhöhungen zur Sicherstellung der erforderlichen Kriechstrecken aufweisen, was jedoch insbesondere auf den Nutfüllfaktor einen negativen Einfluss hat.

Weiter werden alternativ dazu Deckschieber eingesetzt, durch welche die Nuteingänge abgedeckt bzw. verschlossen werden. Die Verwendung von Deckschiebern und insbesondere deren Montage ist jedoch ebenfalls negativ für den Nutfüllfaktor und zudem aufwändig und mithin teuer.

Der Erfindung liegt deshalb die Aufgabe zugrunde, die vorgenannten Nachteile zu überwinden und einen einfach und günstig herzustellenden Stator bereitzustellen, mit welchem bei guter Bewickelbarkeit ein hoher Nutfüllfaktor erreichbar ist.

Diese Aufgabe wird durch die Merkmalskombination gemäß Patentanspruch 1 gelöst.

Erfindungsgemäß wird daher ein Stator für eine elektrische Maschine vorgeschlagen. Der Stator, insbesondere ein Statorpaket des Stators, weist eine Vielzahl von gleichmäßig um eine Rotationsachse angeordneten Zähnen und einer Vielzahl von durch je zwei benachbarte Zähne gebildeten Nuten auf. Bei der elektrischen Maschine kann es sich um einen Elektromotor und insbesondere um einen Außenläufermotor handeln. Die Rotationsachse ist dabei die Achse, zu welcher der Stator konzentrische angeordnet ist und um welche ein mit dem Stator zusammenwirkender Rotor der elektrischen Maschine rotatorisch antreibbar ist. Dabei ist also jeweils eine Nut zwischen den beiden die Nut bildenden Zähnen angeordnet. Die Zähne weisen jeweils einen Zahnhals und einen daran angeordneten Zahnkopf mit einer Zahnkopfstirnseite auf. Insbesondere erstrecken sich die Zahnhälse dabei jeweils in Radialrichtung, sodass der jeweilige Zahnkopf an einem in Radialrichtung freien Ende der Zahnhälse angeordnet ist. Der Zahnkopf bildet zwei einander gegenüberliegende Auskragungen aus, welche sich vom Zahnhals seitlich d.h. also bezogen auf die Rotationsachse in Umfangsrichtung weg erstrecken. An seiner Zahnkopfstirnseite weist der Zahnkopf zwei durch die Auskragungen gebildete Abschnitte und vorzugsweise einen dazwischenliegenden zentralen Abschnitt auf. Zwei zueinander gewandte Auskragungen zweier benachbarter Zähne bilden einen Nuteingang, der durch die zwei benachbarten Zähne gebildeten Nut, durch welchen die Nut in Radialrichtung offen ist. Erfindungsgemäß sind die Zähne mit einer Isolationsschicht beschichtet, welche sich jeweils von dem Zahnhals, die Auskragungen umgreifend und zu der jeweiligen Nut hin abdeckend bis auf den durch die jeweilige Auskragung gebildeten Abschnitt der Zahnkopfstirnseite erstreckt und vorzugsweise in dem durch die Auskragungen gebildeten Abschnitt ausläuft. Dabei ist wesentlich, dass sich die Isolationsschicht nicht lediglich bis an die Zahnkopfstirnseite erstreckt, sondern die Auskragung umgreift, um sich bis auf den durch die jeweilige Auskragung gebildeten Abschnitt der Zahnkopfstirnseite zu erstrecken.

Im Stand der Technik ist davon abweichend meist vorgesehen, dass die Auskragungen nicht umgriffen werden und die Zahnkopfstirnseite vollständig frei von der Isolationsschicht sind. Wird die Isolationsschicht durch eine Umspritzung der Zähne bzw. des Statorpakets mit Kunststoff hergestellt, wird das Statorpaket hierfür an den Nuteingängen im Umspritzwerkzeug gehalten, sodass sich die Umspritzung auch technisch nicht bis auf die Zahnkopfstirnseite erstrecken kann.

Durch die vorgeschlagene Abdeckung der Auskragungen im Bereich des gesamten Nuteingangs inkl. der Abdichtung im Bereich der "Zahnformkontur", also der Zahnkopfstirnseite, kann die erfindungsgemäß gestellte Aufgabe gelöst werden.

Durch die die Auskragungen umgreifende Isolationsschicht verlängert sich die zu realisierende Kriechstrecke zwischen einer die Nut füllenden Statorwicklung bzw. einem in der Nut angeordneten Draht und einem von der Isolationsschicht freien Bereich auf der Zahnkopfstirnseite bzw. einem die Zähne bildenden Blechpaket, welche diversen Normvorgaben unterliegt.

Gleichzeitig kann der zur Verfügung stehende Wickelraum d.h. der Innenraum der Nut besser ausgenutzt werden, da konstruktiv eingebrachte "Erhöhungen" bzw. Vorsprünge der Isolationsschicht reduziert werden können, welche zur Sicherstellung der Kriechstrecke vorhanden sein können.

Dadurch, dass die Isolationsschicht die Auskragungen umgreift, wird der Nuteingang nicht mehr durch die blanken Auskragungen, sondern durch die Isolationsschicht der einander gegenüberliegenden und einen Nuteingang bestimmenden Abschnitte der Isolationsschicht bestimmt, sodass zusätzlich der Wickeldraht während des Flyer-Wickelprozesses bei der Herstellung der Statorwicklungen geschützt wird. Die Isolation des Wickeldrahts kann nicht an den Zähnen bzw. einem die Zähne bildenden Blechpaket beschädigt werden, was einen positiven Einfluss auf die zulässige Wickelgeschwindigkeit hat.

Somit kann der erforderliche Überstand der Wickelbacken in den Nuteingang reduziert werden, was zum einen dickere Drähte bei der Flyerwickeltechnik sowie längere Standzeiten des Wickelwerkzeugs zulässt.

Da die Isolationsschicht nicht im Nuteingang "ausläuft" bzw. endet, können beim Wickeln auch keine den Wickelprozess negativ beeinflussende Kunststoff-Flitter entstehen.

Eine vorteilhafte Weiterbildung sieht vor, dass die Isolationsschicht eine durch Umspritzen der Zähne mit einem Kunststoff gebildete Umspritzung ist.

Weiter kann zumindest der zentrale Abschnitt der Zahnkopfstirnseite, welcher insbesondere in Umfangsrichtung um die Rotationsachse zwischen den durch die Auskragungen gebildeten Abschnitten angeordnet ist, frei von der Isolationsschicht sein. Insbesondere kann ein Luftspalt zwischen dem Stator und dem Rotor statorseitig von dem zentralen Abschnitt der Zahnkopfstirnseite bestimmt werden. Dabei kann auch vorgesehen sein, dass der zentrale Abschnitt vollständig frei von jedwedem die Zahnkopfstirnseite in diesem Bereich abdeckenden Material bleibt.

Vorzugsweise erstreckt sich die Isolationsschicht in Radialrichtung entsprechend nicht über den Zahnkopf und insbesondere nicht über den zentralen Abschnitt der Zahnkopfstirnseite hinaus. Im Falle eines Stators für einen Außenläufer verläuft der zentrale Abschnitt oder generell ein die Erstreckung des Zahnes in Radialrichtung bestimmender Abschnitt der Zahnkopfstirnseite in einer Mantelfläche eines gedachten, konzentrisch zu der Rotationsachse angeordneten Zylinders. Die Isolationsschicht erstreckt sich in Radialrichtung entsprechend nicht über die gedachte Mantelfläche hinaus.

Vorteilhaft ist bei einer weiteren Ausgestaltung vorgesehen, dass sich die Isolationsschicht die Zahnhälse, die zu den Nuten gewandten Abschnitte der Auskragungen und die Auskragungen im Bereich des jeweiligen Nuteingangs in Axialrichtung vollständig abdeckt und/oder sich in Axialrichtung über die Zähne hinauserstreckt. Die Isolationsschicht erstreckt sich also zumindest über die komplette Höhe der Zähne bzw. des Statorpakets.

Gemäß einer Weiterbildung weisen die Auskragungen an der Zahnkopfstirnseite, angrenzend an den jeweiligen Nuteingang einen Rücksprung bzw. Absatz auf, welcher auch als Vertiefung bezeichenbar ist. Die Isolationsschicht deckt die Auskragungen an der Zahnkopfstirnseite im Bereich des Rücksprungs ab und endet an der Zahnkopfstirnseite vorzugsweise in dem Rücksprung bzw. der Vertiefung. Weiter läuft die Isolationsschicht im Bereich des Rücksprungs vorzugsweise keilförmig aus. Dadurch wird die Isolationsschicht an der Zahnkopfstirnseite und konkret an der Vertiefung bzw. an dem Rücksprung zu dem zugehörigen Zahn hin abgedichtet, wobei durch die Vertiefung zusätzlich sichergestellt werden kann, dass die Isolationsschicht in Radialrichtung nicht über den zentralen Abschnitt der Zahnkopfstirnseite bzw. allgemein einen die Erstreckung des Zahnes in Radialrichtung bestimmenden Abschnitt der Zahnkopfstirnseite hinausragt.

Zur Sicherstellung einer ausreichend großen Kriech- und Luftstrecke, kann die Isolationsschicht benachbart zu den Nuteingängen jeweils einen inneren Vorsprung ausbilden, welcher sich von der jeweiligen Auskragung in Radialrichtung in die jeweilige Nut hinein erstreckt. Vorzugsweise erstreckt sich dieser Vorsprung, welcher auch als Erhöhung bezeichnet werden kann, in Axialrichtung entlang des gesamten Nuteingangs.

Zusätzlich oder alternativ dazu kann die Isolationsschicht benachbart zu den Nuteingängen jeweils einen äußeren Vorsprung bzw. eine äußere Erhöhung ausbilden, welcher sich von der jeweiligen Auskragung in Radialrichtung von der jeweiligen Nut wegerstreckt. Auch der äußere Vorsprung erstreckt sich in Axialrichtung vorzugsweise entlang des gesamten Nuteingangs. Weiter vorzugsweise ist der äußere Vorsprung im Bereich des an dem Nuteingang angeordneten Rücksprung der Auskragung angeordnet, wobei sich auch der äußere Vorsprung in Radialrichtung vorzugsweise nicht oder zumindest nicht wesentlich über den zentralen und von der Isolationsschicht freien Abschnitt der Zahnkopfstirnseite hinauserstreckt.

Eine vorteilhafte Weiterbildung sieht darauf basierend vor, dass eine kürzeste Strecke entlang einer Mantelfläche der Isolationsschicht von einem Maximum des inneren Vorsprungs insbesondere über den äußeren Vorsprung zu einem von der Isolationsschicht freien Bereich der Zahnkopfstirnseite zumindest der minimal zulässigen Kriechstrecke des Stators entspricht.

Sofern die minimal zulässige Kriechstrecke bereits durch den die Auskragung umgreifenden Abschnitt der Isolationsschicht erreicht wird, kann auf die inneren und/oder äußeren Vorsprünge verzichtet werden.

Die Auskragungen können also an den Nuteingängen in Axialrichtung verlaufende Kanten ausbilden, welche durch die Isolationsschicht jedoch vollständig abgedeckt sind, sodass ein die Statorwicklungen bildender Draht beim Wickelprozess nicht an den Auskragungen bzw. deren Kanten beschädigt werden kann.

Um die Wahrscheinlichkeit einer Beschädigung beim Wickelprozess weiter zu mindern, kann die Isolationsschicht im Nuteingangsbereich ausschließlich abgerundete Kanten aufweisen.

Ein weiterer Aspekt der Erfindung betrifft ein Verfahren zur Herstellung eines erfindungsgemäßen Stators, welcher ein vorzugsweise aus einer Vielzahl von gestapelten Blechen gebildetes Statorpaket mit der Vielzahl von gleichmäßig um eine Rotationsachse angeordneten Zähnen und der Vielzahl von durch je zwei benachbarte Zähne gebildeten Nuten aufweist. Bei den im Stand der Technik bekannten Statoren ist es üblich, diese an den Nuteingängen im Spritzwerkzeug zu halten, sodass sich aber die Isolationsschicht technisch nicht in die Nuteingänge bzw. die Auskragungen umgreifend bis auf die Zahnkopfstirnseite erstrecken kann. Gemäß dem Verfahren wird vorgeschlagen, dass das Statorpaket in ein Umspritzwerkzeug bzw. Spritzwerkzeug eingelegt und an der Zahnkopfstirnseite oder einem das Statorpaket in Axialrichtung durchlaufenden Durchgang in einer vorbestimmten Ausrichtung in dem Umspritzwerkzeug gehalten wird. Anschließend wird das Statorpaket in dem Umspritzwerkzeug mit der Isolationsschicht umspritzt, wobei der zentrale Abschnitt der Zahnkopfstirnseite vorzugsweise frei von der Umspritzung bzw. der Isolationsschicht bleibt.

Die Zähne können im zentralen Abschnitt der jeweiligen Zahnkopfstirnseite auch zu dem Umspritzwerkzeug korrespondierende Halteflächen oder Vertiefungen aufweisen, wodurch das Ausrichtungen und Halten des Statorpakets in dem Werkzeug erleichtert wird.

Alternativ kann das Statorpaket auch an einem das Statorpaket in Axialrichtung durchlaufenden Durchgang ausgerichtet und/oder indexiert werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: perspektivische Ansicht auf zwei zueinander benachbarte Zähne eines Stators im Bereich eines Nuteingangs;
- Fig. 2: Aufsicht auf die zwei zueinander benachbarten Zähne des Stators im Bereich des Nuteingangs.

Die Figuren sind beispielhaft schematisch und zeigen ausschnittsweise einen Stator bzw. einen Bereich um einen Nuteingang 21 eines Stators in verschiedenen Perspektiven. Gleiche Bezugszeichen in den Figuren weisen auf gleiche funktionale und/oder strukturelle Merkmale hin. Da es sich um zwei Ansichten eines Stators handelt, gilt die zugehörige Beschreibung zugleich für beide Figuren.

Der Stator weist eine Vielzahl von Zähnen 10 auf, welche in Umfangsrichtung gleichmäßig um eine Rotationsachse verteilt angeordnet sind und sich in Radialrichtung R von der Rotationsachse nach radialaußen erstrecken. Jeder der Zähne geht von einem sich in Radialrichtung R erstreckenden Zahnhals 11 in einen Zahnkopf 12 mit einer nach radialaußen freien Zahnkopfstirnseite 14 über. Die Zahnköpfe 12 weisen jeweils zwei einander gegenüberliegende und sich seitlich, d.h. in Umfangsrichtung um die Rotationsachse weg erstreckende Auskragungen 13 auf, sodass an der Zahnkopfstirnseite ein zentraler Abschnitt 142 bestimmt ist, welcher in Umfangsrichtung zu beiden Seiten hin von je einem durch die jeweilige Auskragung 13 bestimmten Abschnitt 141 flankiert wird.

Zwischen je zwei unmittelbar benachbarten Zähnen 10 ist eine Nut 20 gebildet, welche einen Wickelraum bestimmt, in welchem beim Wickeln der Statorspulen ein Draht angeordnet wird.

Zur Isolation des Drahtes von den Zähnen 10 sind die Zähne 10 mit einer Isolationsschicht 30 beschichtet, wobei erfindungsgemäß vorgesehen ist, dass sich die Isolationsschicht 30 von dem Zahnhals 11, die Auskragungen 13 umgreifend und die Auskragungen zu der Nut 20 hin abdeckend bis auf den durch die Auskragungen 13 gebildeten Abschnitt 141 der Zahnkopfstirnseite 14 erstreckt.

An der Zahnkopfstirnseite 14 ist vorliegend ein Rücksprung 15 vorgesehen, wobei die Isolationsschicht 30 auf einer durch den Rücksprung 15 gebildeten Fläche an der Zahnkopfstirnseite 14 ausläuft.

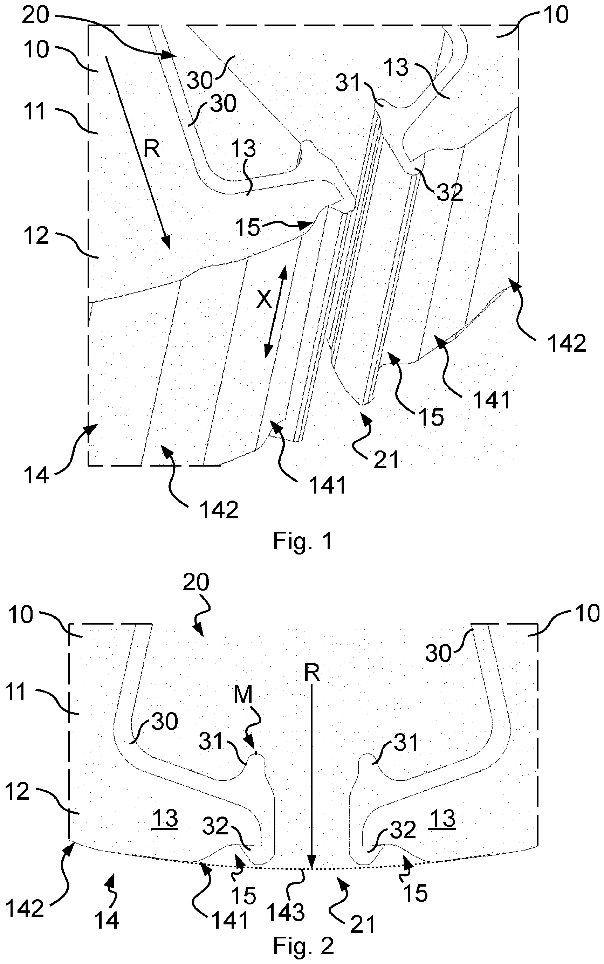

Die Isolationsschicht 30 bildet an der Zahnkopfstirnseite 14 einen sich in Radialrichtung R von der Nut 20 wegerstreckenden äußeren Vorsprung 32 aus, welcher jedoch in Radialrichtung R nicht über den zentralen Abschnitt 142 der Zahnkopfstirnseite 14 hinausgeht, wie insbesondere in Figur 2 sichtbar. Die zentralen Abschnitt 142 der Zähne 10 liegen in einer Mantelfläche 143 eines gedachten, konzentrisch zu der Rotationsachse angeordneten Zylinders, wobei sich die äußeren Vorsprünge 32 der Isolationsschicht nicht über die Mantelfläche 143 hinaus erstrecken. Dadurch wird ein Luftspalt zwischen dem beispielhaft dargestellten Stator und einem den Stator umgebenden Rotor durch die von der Isolationsschicht 30 freien Bereiche der Zahnkopfstirnseiten 14 bzw. durch die zentralen Abschnitte 142 der Zahnkopfstirnseiten 14 bestimmt, wodurch der Wirkungsgrad eines den Stator aufweisenden elektrischen Maschine höher ist als mit einem Stator, welches auch an seinen Zahnkopfstirnseiten eine Isolationsschicht aufweist.

Dadurch, dass die Auskragungen 13 im Bereich der Nuteingänge 21 vollständig und auch insbesondere in Axialrichtung X vollständig von der Isolationsschicht 30 abgedeckt werden, kann ein Draht beim Umwickeln der Statorzähne 10 nicht mehr an den blanken Zähnen 10 bzw. an den Auskragungen 13 beschädigt werden, sodass eine höhere Wickelgeschwindigkeit zulässig ist, als bei einem Stator mit blanken Auskragungen 13.

Um zugleich eine ausreichend große Kriechstrecke zu erreichen, bildet die Isolationsschicht 30 vorliegend an jeder der Auskragungen 13, beidseitig der Nuteingänge 21 je einen sich nach radialinnen in die Nut 20 erstreckenden inneren Vorsprung 31 und einen äußeren, sich nach radialaußen erstreckenden äußeren Vorsprung 32 aus, wobei deren Erstreckung so gewählt ist, dass eine Strecke von einem Maximum M des inneren Vorsprungs 31 auf der Mantelfläche der Isolationsschicht 30 durch den Nuteingang 21 und über den äußeren Vorsprung 32 auf einen von der Isolationsschicht 30 freien Bereich des Zahnkopfes 12 der für den Stator vorbestimmten minimalen Kriechstrecke entspricht. Ist eine entlang der Mantelfläche verlaufende Strecke auch ohne die inneren Vorsprünge 31 und/oder die äußeren Vorsprünge 32 ausreichend, um zumindest die minimale Kriechstrecke bereitzustellen, kann auch auf die inneren Vorsprünge 31 und/oder die äußeren Vorsprünge 32 verzichtet werden.

Auch im Stand der Technik können hierfür zumindest innere Vorsprünge an den Statoren vorgesehen sein, wobei sich deren Vorsprünge im Vergleich weiter in die Nut hineinerstrecken, um die Anforderungen an die minimale Kriechstrecke zu erfüllen, was den Nutfüllfaktor negativ beeinflusst.

Durch die im Vergleich also kleinen inneren Vorsprünge 31 kann der Nutfüllfaktor des dargestellten Stators erhöht werden.

## Patentansprüche

1. Stator für eine elektrische Maschine mit einer Vielzahl von gleichmä-βig um eine Rotationsachse angeordneten Zähnen (10) und einer Vielzahl von durch je zwei benachbarte Zähne gebildeten Nuten (20),
wobei die Zähne (10) jeweils einen Zahnhals (11) und einen daran angeordneten Zahnkopf (12) mit einer Zahnkopfstirnseite (14) aufweisen,
wobei der Zahnkopf (12) zwei einander gegenüberliegende Auskragungen (13) ausbildet, welche sich vom Zahnhals (11) seitlich weg erstrecken,
und der Zahnkopf (12) an seiner Zahnkopfstirnseite (14) zwei durch die Auskragungen (13) gebildete Abschnitte (141) aufweist und zwei zueinander gewandte Auskragungen (13) zweier benachbarter Zähne (10) einen Nuteingang (21) der durch die zwei benachbarten Zähne (10) gebildeten Nut (20) bilden, durch welchen die Nut (20) in Radialrichtung (R) offen ist,
wobei die Zähne (10) mit einer Isolationsschicht (30) beschichtet sind, welche sich jeweils von dem Zahnhals (11), die Auskragungen (13) umgreifend und zu der jeweiligen Nut (20) hin abdeckend bis auf den durch die jeweilige Auskragung (13) gebildeten Abschnitt (141) der Zahnkopfstirnseite (14) erstreckt.

2. Stator nach Anspruch 1,
wobei die Isolationsschicht (30) eine durch Umspritzen der Zähne (10) mit einem Kunststoff gebildete Umspritzung ist.

3. Stator nach Anspruch 1 oder 2,
wobei der Zahnkopf (12) an seiner Zahnkopfstirnseite (14) zwischen den zwei durch die Auskragungen (13) gebildeten Abschnitten (141) einen zentralen Abschnitt (142) aufweist, welcher frei von der Isolationsschicht (30) ist.

4. Stator nach einem der vorhergehenden Ansprüche,
wobei die Isolationsschicht (30) die Zahnhälse (11), die zu den Nuten (20) gewandten Abschnitte der Auskragungen (13) und die Auskragungen (13) im Bereich des jeweiligen Nuteingangs (21) in Axialrichtung (X) vollständig abdeckt und/oder sich in Axialrichtung (X) über die Zähne (10) hinauserstreckt.

5. Stator nach einem der vorhergehenden Ansprüche,
wobei die Auskragungen (13) an der Zahnkopfstirnseite (14), angrenzend an den jeweiligen Nuteingang (21) einen Rücksprung (15) aufweisen
und die Isolationsschicht (30) die Auskragungen (13) an der Zahnkopfstirnseite (14) im Bereich des Rücksprungs (15) abdeckt.

6. Stator nach einem der vorhergehenden Ansprüche,
wobei die Isolationsschicht (30) benachbart zu den Nuteingängen (21) jeweils einen inneren Vorsprung (31) ausbildet, welcher sich von der jeweiligen Auskragung (13) in Radialrichtung (R) in die jeweilige Nut (20) hinein erstreckt.

7. Stator nach einem der vorhergehenden Ansprüche,
wobei die Isolationsschicht (30) benachbart zu den Nuteingängen (21) jeweils einen äußeren Vorsprung (32) ausbildet, welcher sich von der jeweiligen Auskragung (13) in Radialrichtung (R) von der jeweiligen Nut (20) wegerstreckt.

8. Stator nach den beiden vorhergehenden Ansprüchen,
wobei eine kürzeste Strecke entlang einer Mantelfläche der Isolationsschicht (30) von einem Maximum (M) des inneren Vorsprungs (31) über den äußeren Vorsprung (32) zu einem von der Isolationsschicht (30) freien Bereich der Zahnkopfstirnseite der minimal zulässigen Kriechstrecke des Stators entspricht.

9. Stator nach einem der vorhergehenden Ansprüche,
wobei die Auskragungen (13) an den Nuteingängen (21) in Axialrichtung (X) verlaufende Kanten ausbilden, welche durch die Isolationsschicht (30) vollständig abgedeckt sind.

10. Stator nach einem der vorhergehenden Ansprüche,
wobei die Isolationsschicht (30) im Nuteingangsbereich (21) ausschließlich abgerundete Kanten aufweist.

11. Verfahren zur Herstellung eines Stators gemäß einem der vorhergehenden Ansprüche,
wobei der Stator ein Statorpaket mit der Vielzahl von gleichmä-βig um eine Rotationsachse angeordneten Zähnen (10) und der Vielzahl von durch je zwei benachbarte Zähne (10) gebildeten Nuten (20) aufweist,
wobei das Statorpaket in ein Umspritzwerkzeug eingelegt und an der Zahnkopfstirnseite (14) oder an einem das Statorpaket in Axialrichtung durchlaufenden Durchgang in einer vorbestimmten Ausrichtung in dem Umspritzwerkzeug gehalten wird,
wobei das Statorpaket in dem Umspritzwerkzeug mit der Isolationsschicht (30) umspritzt wird.
